# EUROPÄISCHE PATENTSCHRIFT

(11) **EP 4 105 045 B1**
(45) Veröffentlichungstag und Bekanntmachung des Hinweises auf die Patenterteilung: **15.05.2024**
(21) Anmeldenummer: 21213357.3
(22) Anmeldetag: 09.12.2021
(51) Int. Cl.: B60C 11/24

(54) **VERFAHREN ZUR ERMITTLUNG EINER PROFILTIEFE EINES FAHRZEUGREIFENS**
METHOD FOR DETERMINING A TREAD DEPTH OF A VEHICLE TYRE
PROCÉDÉ DE DÉTERMINATION D'UNE PROFONDEUR DE PROFILÉ D'UN PNEU DE VÉHICULE

(30) Priorität: 18.06.2021 DE 102021206304
(43) Veröffentlichungstag der Anmeldung: 21.12.2022
(73) Patentinhaber: Continental Reifen Deutschland GmbH, 30175 Hannover (DE)
(72) Erfinder: Sahlmüller, Baldo, 30165 Hannover (DE)
(74) Vertreter: Continental Corporation

(56) Entgegenhaltungen:
- WO-A1-2020/205703
- DE-A1-102005 052 476
- DE-A1-102018 200 358

## Beschreibung

Die Erfindung betrifft ein Verfahren zur Ermittlung einer Profiltiefe eines Fahrzeugreifens.

Es ist bekannt, bei Fahrzeugreifen eine Reifendrucküberwachung einzusetzen, um einen Druckverlust sicher zu detektieren.

Außerdem gibt es unterschiedliche Ansätze, die Profiltiefe eines Fahrzeugreifens mit einem Reifensensor zu ermitteln. Die meisten bisherigen Konzepte wurden jedoch nicht umgesetzt, da sie unterschiedliche Nachteile besitzen.

Die DE 10 2018 200358 A1, DE 10 2005 052476 A1 und WO 2020/205703 A1 offenbaren unterschiedliche Verfahren zur Bestimmung einer Profiltiefe.

Der Erfindung lag die Aufgabe zugrunde, ein Verfahren bereitzustellen, mit dem bekannte Verfahren zur Bestimmung einer Profiltiefe verbessert werden können.

Gelöst wird die Aufgabe durch ein Verfahren nach Anspruch 1.

Ein Vorteil der Erfindung ist insbesondere darin zu sehen, dass mit dem neuen Verfahren die Profiltiefe am Fahrzeugreifen auf einfache Weise und mit einer hohen Genauigkeit abgeschätzt werden kann.

Bei dem neuen Verfahren wird zunächst eine erste Methode zur Bestimmung der Profiltiefe eingesetzt.

Mit dieser ersten Methode wird ein bestimmter Profiltiefenwert ermittelt. Anschließend wird dieser Wert mit mindestens einer zweiten Methode überprüft.

Beide Werte für die ermittelte Profiltiefe werden zusammen mit den Unsicherheiten der beiden Werte in einer Informationsfusionseinheit zusammengeführt und mit einem Kalmanfilter ausgewertet. Bei dem Kalmanfilter handelt es sich um eine bewährte mathematische Methode, mit der zwei Methoden, die Größen ermitteln, die ein System beschreiben, wobei eine Methode vorhersagebasiert ist und die andere Methode auf Messungen am System basiert. Mit dem Kalmanfilter dienen die zwei Methoden zur Profiltiefenbestimmung nicht nur zur gegenseitigen Überprüfung der Messergebnisse, sondern beide Methoden werden mit Hilfe der Informationsfusionseinheit zusammengeführt, um eine größere Genauigkeit der Messung zu erreichen.

Dadurch erhält man einen Profiltiefenwert mit einer sehr hohen Genauigkeit. Erreicht die Profiltiefe einen bestimmten Mindestwert, kann automatisiert eine Warnung an den Fahrzeughalter ausgegeben werden.

In einer vorteilhaften Weiterbildung der Erfindung ist vorgesehen, dass der Prozess zur Ermittlung der Profiltiefe in regelmäßigen Zeitintervallen von ca. 2 bis 30 Minuten durchgeführt wird.

Dadurch kann in relativ kurzen Zeitintervallen immer eine aktuelle Profiltiefe ermittelt und z.B. an den Fahrer des Fahrzeuges weitergeleitet werden.

In einer vorteilhaften Weiterbildung der Erfindung ist vorgesehen, dass die Signalverarbeitungsvorrichtung in einem Reifenmodul im Fahrzeugreifen angeordnet ist.

Dadurch werden die Messdaten direkt mit einem Mirkocomputer im Reifenmodul ausgewertet.

In einer vorteilhaften Weiterbildung der Erfindung ist vorgesehen, dass bei der ersten Methode zur Ermittlung der Profiltiefe ein Sensor genutzt wird, der im Reifenmodul integriert ist.

Dadurch kann die Auswertung bzw. die Bestimmung der Profiltiefe ebenfalls mit einem Mirkocomputer im Reifenmodul erfolgen.

In einer weiteren vorteilhaften Weiterbildung der Erfindung ist vorgesehen, dass die Bestimmung der Referenz-Profiltiefe mit einer zweiten Methode erfolgt bei der mit einem Beschleunigungssensor die Radialbeschleunigung des Fahrzeugreifens aufgezeichnet und ausgewertet wird.

Die Radialbeschleunigung an einem Fahrzeugreifen lässt sich auf einfache Weise mit einem Beschleunigungssensor messen.

In einer weiteren vorteilhaften Weiterbildung der Erfindung ist vorgesehen, dass der Beschleunigungssensor die Radialbeschleunigungen des Fahrzeugreifens beim Ein- und Auslaufen in die Bodenaufstandsfläche aufzeichnet, wobei die ermittelten Messkurven analysiert werden und anschließend mit einem Algorithmus eine Profiltiefe in Abhängigkeit des Messkurvenverlaufes ermittelt wird.

Der Sensor zeichnet den Beschleunigungsverlauf beim Ein- und Auslaufen in die Bodenaufstandsfläche auf. Mit dem gemessenen Beschleunigungsverlauf lässt mit mathematischen Methoden ebenfalls eine Profiltiefe für den Fahrzeugreifen ermitteln.

In einer weiteren vorteilhaften Weiterbildung der Erfindung ist vorgesehen, dass bei der ersten Methode die tatsächlich zurück gelegte Streckendistanz des Fahrzeugreifens durch eine Auswertung von GPS-Koordinaten des Fahrzeuges bestimmt wird.

Mit einer Auswertung von GPS-Koordinaten des Fahrzeuges lässt sich die tatsächlich zurückgelegte Streckendistanz auf einfache Weise ermitteln.

In einer weiteren vorteilhaften Weiterbildung der Erfindung ist vorgesehen, dass bei der ersten Methode die tatsächlich zurückgelegte Streckendistanz des Fahrzeugreifens durch einen Sensor, der im Reifenmodul integriert ist und in regelmäßigen Abständen die Radialbeschleunigung misst, mit Hilfe des Reifendurchmessers bestimmt wird.

In einer weiteren vorteilhaften Weiterbildung der Erfindung ist vorgesehen, dass bei der ersten Methode die auf den Fahrzeugreifen wirkende Radlast und die Reifenlufttemperatur berücksichtigt wird.

Dadurch lässt sich die Profiltiefe mit einer höheren Genauigkeit abschätzen.

Es ist vorgesehen, dass bei der ersten Methode die Randbedingungen eine Vielzahl von Fahrparametern umfassen,
wobei bei den Fahrparametern zumindestens die Geschwindigkeiten, die Längsbeschleunigungen und/ oder die Querbeschleunigungen des Fahrzeuges aufgezeichnet und ausgewertet werden.

Diese Fahrparameter haben einen relativ hohen Einfluss auf den Abrieb des Fahrzeugreifens.

In einer weiteren vorteilhaften Weiterbildung der Erfindung ist vorgesehen, dass bei der ersten Methode die Randbedingungen eine Vielzahl von Fahrzeugparametern umfassen,
wobei bei den Fahrzeugparametern zumindestens der Radstand, die Spurbreite, das Gewicht, die Radlast, der Sturz und/oder der Schräglauf der Fahrzeugräder ausgewertet werden.

Diese Fahrzeugparameter lassen sich einfach erfassen und haben einen signifikanten Einfluss auf den Profilabrieb am Fahrzeugreifen.

In einer weiteren vorteilhaften Weiterbildung der Erfindung ist vorgesehen, dass bei der ersten Methode die Randbedingungen eine Vielzahl von Umgebungsparametern umfassen,
wobei bei den Umgebungsparametern zumindestens die Außentemperatur, die Feuchtigkeit und/oder Fahrbahnrauigkeit ausgewertet werden.

Diese Umgebungsparameter haben einen signifikanten Einfluss auf den Profilabrieb am Fahrzeugreifen.

In einer weiteren vorteilhaften Weiterbildung der Erfindung ist vorgesehen, dass der Sensor in einem Reifenmodul integriert ist,
wobei das Reifenmodul auf der Reifeninnenseite angeordnet ist und die Messdaten über eine Funkverbindung zu einer zentralen Empfangseinheit im Fahrzeug übertragen werden.

Dadurch wird die automatisierte Auswertung der Messdaten vom Sensor vereinfacht.

In einer weiteren vorteilhaften Weiterbildung der Erfindung ist vorgesehen, dass im Armaturenbrett des Fahrzeuges die Profiltiefe des Fahrzeugreifens automatisiert angezeigt wird.

Dadurch wird der Fahrzeughalter bzw. der Fahrer des Fahrzeuges auf einfache Weise gewarnt, wenn eine Mindestprofiltiefe unterschritten wird.

Anhand eines Ausführungsbeispiels wird die Erfindung im Folgenden näher beschrieben.

Es zeigt:
Fig. 1: Einen Beschleunigungsverlauf.
Fig. 2: Ein Ablaufdiagramm
Fig. 3: Einen beispielhaften zeitlichen Verlauf der Methode.

Das neue Verfahren zur Profiltiefenbestimmung beruht darauf verschiedene indirekte Meß-Methoden miteinander zu kombinieren, um die Genauigkeit der Profiltiefenbestimmung zu verbessern.

Die erste Methode beruht darauf anhand einer Auswertung von Randbedingungen einen Abrieb und damit die Profitiefe für jede Radposition zu bestimmen.

Die Randbedingungen können u.a. die folgenden Größen umfassen: Zurückgelegte Laufleistung des Fahrzeugreifens, Geschwindigkeit, Längsbeschleunigung, Querbeschleunigung, Z-Beschleunigung des Fahrzeuges.

Die Fahrzeugparameter, die ebenfalls als Randbedingung berücksichtigt werden können, umfassen u.a. die folgenden Größen:
Radstand, Spurbreite, Gewicht, Radlast, Sturz, Schräglauf

Die Umgebungsparameter, die ebenfalls als Randbedingung berücksichtigt werden können, umfassen u.a. die folgenden Größen:
Außentemperatur, Feuchtigkeit (Regen), Fahrbahnrauigkeit

Die Reifenparameter, die ebenfalls als Randbedingung berücksichtigt werden können, umfassen u.a. die folgenden Größen:
Reifengröße, Reifendruck, Profilgeometrie, Profiltiefe, Lauftreifenmaterial, Reifensteifigkeiten des Fahrzeugreifen.

Die zweite Methode zur Bestimmung der Referenzprofiltiefe beruht darauf, dass sich die Deformation des Reifens beim Eintreten bzw. Verlassen der Bodenaufstandsfläche mit sich verringernder Profiltiefe ändert. Insbesondere wird der lokale Radius am Innerliner beim Durchlaufen durch die Bodenaufstandsfläche betrachtet. Es ist bekannt, dass sich die Änderung des lokalen Radius, das heißt der Bereich der stärksten Änderung der Deformation (Biegung) des Reifens, mit abnehmender Profiltiefe ebenfalls verkleinert. Diese Abnahme der Änderung minimalen lokalen Radius kann über die Radialbeschleunigung am Innerliner bestimmt werden. Daher wird für diesen Ansatz ein Beschleunigungssensor im Reifen eingebracht, der idealerweise ebenfalls Druck und Temperatur messen kann.

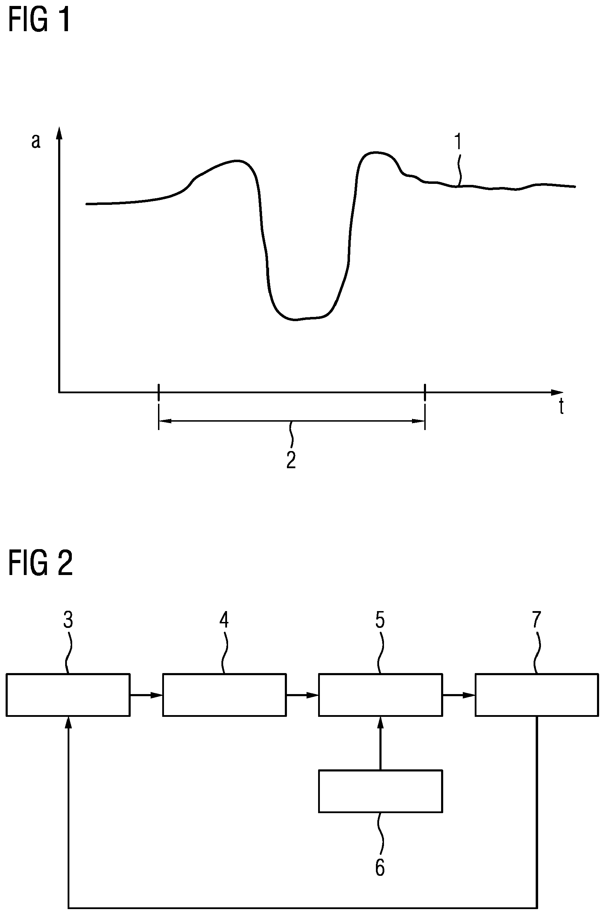

Die Figur 1 zeigt ein Beispiel für einen Beschleunigungsverlauf, den der Beschleunigungssensor im Fahrzeugreifen misst. Auf der x-Achse ist die Zeit t in Sekunden aufgetragen. Auf der y-Achse ist die Radialbeschleunigung a aufgetragen. Beim Ein- und Auslaufen des Sensors in die Bodenaufstandsfläche wird ein typisches Beschleunigungssignal gemessen, wie es für den Zeitraum 2 dargestellt ist.

Mit dem Beschleunigungsverlauf 1 wird eine Profiltiefe abgeschätzt, die von dem dargestellten Messkurvenverlauf im Zeitraum 2 abhängig ist.

Bei der Bestimmung der Profiltiefe in Abhängigkeit vom Messkurvenverlauf 1 wird auf ein bekanntes Verfahren zugegriffen.

Bei diesem Verfahren werden insbesondere die Steigungen des Messkurvenverlaufes untersucht.

Das entsprechende Verfahren ist u.a. in der Offenlegungsschrift DE102015216212 beschrieben.

Die Figur 2 zeigt ein Ausführungsbeispiel für ein Ablaufdiagramm zur Bestimmung einer Profiltiefe. Zunächst wird mit einer ersten Methode eine Profiltiefe bestimmt. Mit einer zweiten Methode wird eine Referenzprofiltiefe ermittelt, die beim Aktualisierungsschritt mit der ermittelten Profiltiefe der ersten Methode verglichen wird.

Beim Anfangszustand 3 liegt eine Profiltiefe zum Zeitpunkt t = k-1 vor. Beim Vorhersageschritt 4 wird eine Profiltiefe mit einer ersten Methode ermittelt. Die Profiltiefe wird beispielsweise mit einer Methode ermittelt, bei der unterschiedliche Randbedingungen zum Fahrzeug und zur Fahrzeugbewegung ausgewertet werden.

Eine wesentliche Randbedingung umfasst die zurückgelegte Laufleistung des Fahrzeugreifens zu einem bestimmten Zeitpunkt. Mit den jeweiligen Randbedingungen lässt sich eine Profiltiefe vorhersagen. Als nächstes erfolgt ein Aktualisierungsschritt 5, bei der die vorgesagte Profiltiefe mit einer Referenzprofiltiefe verglichen wird, die sich aus einer Messung mit einem Sensor ergibt. Der Aktualisierungsschritt erfolgt mit einem Kalmanfilter, bei der mit einer mathematischen Methode die Unsicherheit der Vorhersage berücksichtigt wird. Die Referenzprofiltiefe ergibt sich aus der Messung 6. Bei dieser Messung wird die Profiltiefe mit einem Sensor im Reifenmodul ermittelt. Nachdem der Aktualisierungsschritt 5 durchgeführt wurde, ergibt sich ein Endzustand 7, bei dem ein fusioniertes Ergebnis zur Profiltiefe bereitgestellt wird. Das fusionierte Ergebnis wird mit einer Informationsfusionseinheit und dem Kalmanfilter ermittelt.

Der Kalmanfilter kann durch folgende Gleichungen beschrieben werden:
Vorhersage: x(i,i-1) = A*x(i-1) + B*t
Unsicherheit der Vorhersage (Kovarianz): P(i,i-1) = A*P(i-1)*A^{T} + Q
Korrektur: x(i) = x(i,i-1) + K*y(i)
Unsicherheit nach Korrektur (Kovarianz): P(i) = P(i,i-1) - K*S*K^{T} ,
mit der Innovation: y(i) = z(i) - H*x(i) ,
sowie der Residualkovarianz: S = H*P(i,i-1)*H^{T} + R ,
und der Kalman-Matrix: K = P(i,i-1)*H^{T}*S⁻¹
Hierbei sind:
   x(i,i-1): Vorhersage der Profiltiefe zum Zeitpunkt i
   x(i-1): Profiltiefe zum vorherigen Zeitpunkt i-1
   x(i): korrigierte Vorhersage der Profiltiefe zum Zeitpunkt i
   A: Übergangsmatrix, die den Zustand x(i-1) auf den Zeitpunkt i propagiert
   A^{T}: transformierte Matrix A
   B: Kontrollmatrix, die die Dynamik der deterministischen Störung beschreibt.
   t: Deterministische Störung (Kontrollvektor)
   P(i,i-1): Kovarianzmatrix der Fehler von x
   P (i): Kovarianzmatrix der Fehler von xk(i) nach Anwendung von z(i)
   Q: Fehlerabschätzung des Übergangsprozesses
   z(i): Messung der Referenzprofiltiefe zum Zeitpunkt i
   H: Beobachtungsmatrix
   H^{T} transformierte Matrix H
   R: Fehlerabschätzung der Messung der Referenzprofiltiefe
   K^{T}: transformierte Matrix K
   Diese Größen sind für die jeweiligen Mess- bzw. Vorhersageprinzipien und für verschiedene Reifen zu bestimmen.

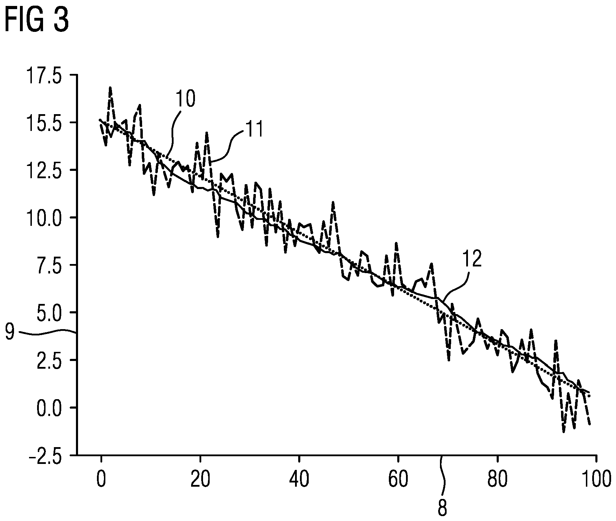

Die Figur 3 zeigt einen beispielhaften zeitlichen Verlauf der beschriebenen Methode, bei der die mit der Referenzmethode ermittelten Werte einer Profiltiefe mit Hilfe des Kalman-Filters mit der jeweils mit der Vorhersagemethode ermittelten Werte einer Profiltiefe fusioniert werden. Auf der x-Achse 8 ist die Kilometerzahl, die der Reifen gelaufen ist, beispielhaft dargestellt. Auf der y-Achse 9 ist die jeweilige Profiltiefe dargestellt. Die tatsächliche Profiltiefe 10 wurde hierbei vereinfacht als linearer Zusammenhang zwischen Kilometerzahl und Profiltiefe dargestellt. Die tatsächliche Profiltiefe 10 ist mit der gepunkteten Linie dargestellt. Die Messungen der Referenzprofiltiefe 11 sind durch größere Messschwankungen ausgezeichnet und mit der gestrichelten Linie 11 dargestellt. Der durch das Kalman-Filter bestimmte, fusionierte Datensatz ist in der durchgezogenen Linie 12 dargestellt. Hier wird insbesondere deutlich, dass die Kalman-Filterung Schwankungen der Messungen der Referenzprofiltiefe reduziert.

Mit dem neuen Verfahren werden die oben genannten Methoden zur Profilbestimmung optimal miteinander kombiniert, um eine möglichst genaue Profiltiefe ermitteln zu können.

Die entsprechenden Daten können sowohl dem Fahrer des Fahrzeuges als auch dem Flottenmanager von vielen Fahrzeugen zur Verfügung gestellt werden. Dadurch kann z.B. einfach abgeschätzt werden, wann der nächste Reifenwechsel für ein bestimmtes Fahrzeug erforderlich ist.

### Bezugszeichenliste

- 1: Gleichbleibende Radialbeschleunigung
- 2: Beschleunigungsverlauf beim Ein- und Auslaufen in die Bodenaufstandsfläche
- 3: Anfangszustand: Profiltiefe zum Zeipunkt t=k-1
- 4: Vorhersageschritt zur Ermittlung der Profiltiefe mit einer ersten Methode
- 5: Aktualisierungsschritt: Vergleich Vorhersage mit Messung, Korrektur von Zustand und Unsicherheit (Einsatz des Kalmanfilters)
- 6: Ermittlung der Referenzprofiltiefe mit Sensor im Reifenmodul mit einer zweiten Methode
- 7: Endzustand mit einem fusionierten Ergebnis zur Profiltiefe: Profiltiefe zum Zeipunkt t=k-1
- 8: X-Achse: Kilomterzahl bzw. zurückgelegte Strecke des Fahrzeugreifens
- 9: Y-Achse: Profiltiefe
- 10: Tatsächliche Profiltiefe
- 11: Referenzprofiltiefe
- 12: Fusionierter Datensatz für Profiltiefe

- a: Radialbeschleunigung
- t: Zeit

## Patentansprüche

1. Verfahren zur Ermittlung einer Profiltiefe eines Fahrzeugreifens mit den folgenden Schritten:
a) Bereitstellen eines Fahrzeugreifens mit einer bekannten Profiltiefe,
b) Ermittlung einer vorhergesagten Profiltiefe und einer Unsicherheit der Vorhersage mit einer ersten Methode,
wobei die Profiltiefenbestimmung über eine Auswertung von mindestens einer Randbedingungen erfolgt, die einen Reifenabrieb am Fahrzeug beeinflusst,
c) Bestimmung einer vorhergesagten Referenz-Profiltiefe vom Fahrzeugreifen über eine Messung mit einer zweiten Methode (6), wobei die Unsicherheit der Messung ebenfalls bekannt ist,
d) Bereitstellung einer Signalverarbeitungsvorrichtung,
wobei die mit der ersten Methode vorhergesagte Profiltiefe und die vorhergesagte Referenz-Profiltiefe in der Signalverarbeitungsvorrichtung gesammelt und mit einer Informationsfusionseinheit verarbeitet werden, wobei die Informationsfusionseinheit ein Kalmanfilter umfasst,
e) Verarbeitung der mit der ersten Methode vorhergesagte Profiltiefe mit der dazu gehöhrenden Unsicherheit der Vorhersage und der mit der zweiten vorhergesagten Referenz-Profiltiefe mit der dazu gehörenden Unsicherheit der Messung mit dem Kalmanfilter,
wobei iterativ ein Vorhersageschritt (4) und ein Korrekturschritt durchgeführt wird und anschließend ein fusioniertes Ergebnis zur Profiltiefe bereit gestellt wird,
wobei bei der ersten Methode die Randbedingungen eine Vielzahl von Fahrparametern umfassen, wobei bei den Fahrparametern zumindest die Geschwindigkeiten und die Lenkwinkel des Fahrzeugs aufgezeichnet und ausgewertet werden.

2. Verfahren nach Anspruch 1,
**dadurch gekennzeichnet, dass**
der Prozess zur Ermittlung der Profiltiefe in regelmäßigen Zeitintervallen von ca. 2 bis 30 Minuten durchgeführt wird.

3. Verfahren nach einem der vorhergehenden Ansprüche,
**dadurch gekennzeichnet, dass**
die Signalverarbeitungsvorrichtung in einem Reifenmodul im Fahrzeugreifen angeordnet ist.

4. Verfahren nach Anspruch 3,
**dadurch gekennzeichnet, dass**
bei der ersten Methode (6) zur Ermittlung der Profiltiefe ein Sensor genutzt wird, der im Reifenmodul integriert ist.

5. Verfahren nach einem der vorhergehenden Ansprüche,
**dadurch gekennzeichnet, dass**
die Bestimmung der Referenz-Profiltiefe mit einer zweiten Methode (6) erfolgt, bei der mit einem Beschleunigungssensor die Radialbeschleunigung des Fahrzeugreifens aufgezeichnet und ausgewertet wird.

6. Verfahren nach Anspruch 5,
**dadurch gekennzeichnet, dass**
der Beschleunigungssensor die Radialbeschleunigungen (a) des Fahrzeugreifens beim Ein- und Auslaufen in die Bodenaufstandsfläche aufzeichnet,
wobei die ermittelten Messkurven analysiert werden und anschließend mit einem Algorithmus eine Profiltiefe in Abhängigkeit des Messkurvenverlaufes ermittelt wird.

7. Verfahren nach einem der vorhergehenden Ansprüche,
**dadurch gekennzeichnet, dass**
bei der ersten Methode als messbare Randbedingung zumindestens die zurückgelegte Laufleistung des Fahrzeugreifens berücksichtigt wird.

8. Verfahren nach einem der vorhergehenden Ansprüche,
**dadurch gekennzeichnet, dass**
die zurückgelegte Laufleistung des Fahrzeugreifens mit einem Sensor, der im Reifenmodul integriert ist und in regelmäßigen zeitlichen Abständen die Radialbeschleunigung misst, ermittelt wird.

9. Verfahren nach einem der vorhergehenden Ansprüche,
**dadurch gekennzeichnet, dass**
bei der ersten Methode die tatsächlich zurück gelegte Streckendistanz des Fahrzeugreifens durch eine Auswertung von GPS-Koordinaten des Fahrzeuges bestimmt wird.

10. Verfahren nach einem der vorhergehenden Ansprüche,
**dadurch gekennzeichnet, dass**
bei der ersten Methode die auf den Fahrzeugreifen wirkende Radlast und die Reifenlufttemperatur berücksichtigt wird.

11. Verfahren nach einem der vorhergehenden Ansprüche,
**dadurch gekennzeichnet, dass**
bei der ersten Methode die Randbedingungen eine Vielzahl von Fahrparametern umfassen,
wobei bei den Fahrparametern zumindestens die Geschwindigkeiten, die Längsbeschleunigungen und/ oder die Querbeschleunigungen des Fahrzeuges aufgezeichnet und ausgewertet werden.

12. Verfahren nach einem der vorhergehenden Ansprüche,
**dadurch gekennzeichnet, dass**
bei der ersten Methode die Randbedingungen eine Vielzahl von Fahrzeugparametern umfassen,
wobei bei den Fahrzeugparametern zumindestens der Radstand, die Spurbreite, das Gewicht, die Radlast, der Sturz und/oder der Schräglauf der Fahrzeugräder ausgewertet werden.

## Claims

1. Method for determining a tread depth of a vehicle tyre, comprising the following steps:
a) providing a vehicle tyre having a known tread depth,
b) determining a predicted tread depth and an uncertainty of the prediction using a first method,
tread depth being ascertained by way of an evaluation of at least one boundary condition that influences tyre wear on the vehicle,
c) ascertaining a predicted reference tread depth of the vehicle tyre by way of a measurement using a second method (6),
the uncertainty of the measurement likewise being known,
d) providing a signal processing device,
the tread depth predicted using the first method and the predicted reference tread depth being gathered in the signal processing device and processed using an information fusion unit,
the information fusion unit comprising a Kalman filter,
e) processing the tread depth predicted using the first method with the associated uncertainty of the prediction and the reference tread depth predicted using the second method with the associated uncertainty of the measurement using the Kalman filter,
a prediction step (4) and a correction step being carried out iteratively and then a fused result being provided for the tread depth,
wherein the first method involves the boundary conditions comprising a multiplicity of driving parameters, the driving parameters involving at least the speeds and the steering angles of the vehicle being recorded and evaluated.

2. Method according to Claim 1,
**characterized in that**
the process of determining the tread depth is carried out at regular time intervals of approximately 2 to 30 minutes.

3. Method according to one of the preceding claims,
**characterized in that**
the signal processing device is arranged in a tyre module in the vehicle tyre.

4. Method according to Claim 3,
**characterized in that**
the first method (6) involves determining the tread depth by using a sensor that is integrated in the tyre module.

5. Method according to one of the preceding claims,
**characterized in that**
the reference tread depth is ascertained using a second method (6), which involves using an acceleration sensor to record and evaluate the radial acceleration of the vehicle tyre.

6. Method according to Claim 5,
**characterized in that**
the acceleration sensor records the radial accelerations (a) of the vehicle tyre on entering and exiting the ground contact area,
wherein the determined measurement curves are analysed and then an algorithm is used to determine a tread depth on the basis of the measurement curve response.

7. Method according to one of the preceding claims,
**characterized in that**
the first method involves the measurable boundary condition taken into account being at least the mileage covered by the vehicle tyre.

8. Method according to one of the preceding claims,
**characterized in that**
the mileage covered by the vehicle tyre is determined using a sensor that is integrated in the tyre module and measures the radial acceleration at regular intervals of time.

9. Method according to one of the preceding claims,
**characterized in that**
the first method involves the distance actually covered by the vehicle tyre being ascertained by way of an evaluation of GPS coordinates of the vehicle.

10. Method according to one of the preceding claims,
**characterized in that**
the first method involves taking account of the wheel load acting on the vehicle tyre and the tyre air temperature.

11. Method according to one of the preceding claims,
**characterized in that**
the first method involves the boundary conditions comprising a multiplicity of driving parameters,
the driving parameters involving at least the speeds, the longitudinal accelerations and/or the lateral accelerations of the vehicle being recorded and evaluated.

12. Method according to one of the preceding claims,
**characterized in that**
the first method involves the boundary conditions comprising a multiplicity of vehicle parameters,
the vehicle parameters involving at least the wheelbase, the track width, the weight, the wheel load, the camber and/or the skew of the vehicle wheels being evaluated.

## Revendications

1. Procédé permettant d'établir une profondeur de sculpture d'un pneu de véhicule, comprenant les étapes suivantes consistant à :
a) fournir un pneu de véhicule d'une profondeur de sculpture connue,
b) établir une profondeur de sculpture prédite et une incertitude de la prédiction, à l'aide d'une première méthode,
dans lequel la détermination de profondeur de sculpture est effectuée par une évaluation d'au moins une contrainte qui affecte une usure de pneu sur le véhicule,
c) déterminer une profondeur de sculpture de référence prédite du pneu de véhicule par une mesure à l'aide d'une deuxième méthode (6),
l'incertitude de la mesure étant connue également,
d) fournir un dispositif de traitement de signal,
dans lequel la profondeur de sculpture prédite à l'aide de la première méthode et la profondeur de sculpture de référence prédite sont rassemblées dans le dispositif de traitement de signal et sont traitées par une unité de fusion d'informations,
dans lequel l'unité de fusion d'informations comprend un filtre de Kalman,
e) traiter la profondeur de sculpture prédite à l'aide de la première méthode avec l'incertitude associée de la prédiction, et la deuxième profondeur de sculpture de référence prédite avec l'incertitude associée de la mesure à l'aide du filtre de Kalman,
dans lequel une étape de prédiction (4) et une étape de correction sont effectuées par itérations, et ensuite un résultat fusionné concernant la profondeur de sculpture est fourni,
dans lequel, dans la première méthode, les contraintes comprennent une pluralité de paramètres de conduite, dans lequel, parmi les paramètres de conduite, au moins les vitesses et les angles de braquage du véhicule sont enregistrés et évalués.

2. Procédé selon la revendication 1,
**caractérisé en ce que**
le processus d'établissement de la profondeur de sculpture est effectué à des intervalles de temps réguliers d'environ 2 à 30 minutes.

3. Procédé selon l'une quelconque des revendications précédentes, **caractérisé en ce que**
le dispositif de traitement de signal est disposé dans un module de pneu dans le pneu de véhicule.

4. Procédé selon la revendication 3,
**caractérisé en ce que**
dans la première méthode (6), un capteur intégré dans le module de pneu est utilisé pour établir la profondeur de sculpture.

5. Procédé selon l'une quelconque des revendications précédentes, **caractérisé en ce que**
la détermination de la profondeur de sculpture de référence est effectuée à l'aide d'une deuxième méthode (6) dans laquelle un capteur d'accélération enregistre et évalue l'accélération radiale du pneu de véhicule.

6. Procédé selon la revendication 5,
**caractérisé en ce que**
le capteur d'accélération enregistre les accélérations radiales (a) du pneu de véhicule à l'entrée dans et à la sortie de la surface de contact avec le sol,
dans lequel les courbes de mesure établies sont analysées, et ensuite une profondeur de sculpture est établie par un algorithme en fonction du tracé des courbes de mesure.

7. Procédé selon l'une quelconque des revendications précédentes, **caractérisé en ce que**
dans la première méthode, au moins la performance kilométrique parcourue du pneu de véhicule est prise en compte comme une contrainte mesurable.

8. Procédé selon l'une quelconque des revendications précédentes, **caractérisé en ce que**
la performance kilométrique parcourue du pneu de véhicule est établie à l'aide d'un capteur qui est intégré dans le module de pneu et mesure l'accélération radiale à des intervalles de temps réguliers.

9. Procédé selon l'une quelconque des revendications précédentes, **caractérisé en ce que**
dans la première méthode, la distance de trajet réellement parcourue du pneu de véhicule est déterminée par une évaluation de coordonnées GPS du véhicule.

10. Procédé selon l'une quelconque des revendications précédentes, **caractérisé en ce que**
dans la première méthode, la charge sur roue agissant sur le pneu de véhicule et la température d'air du pneu sont prises en compte.

11. Procédé selon l'une quelconque des revendications précédentes, **caractérisé en ce que**
dans la première méthode, les contraintes comprennent une pluralité de paramètres de conduite,
dans lequel, parmi les paramètres de conduite, au moins les vitesses, les accélérations longitudinales et/ou les accélérations transversales du véhicule sont enregistrées et évaluées.

12. Procédé selon l'une quelconque des revendications précédentes, **caractérisé en ce que**
dans la première méthode, les contraintes comprennent une pluralité de paramètres de véhicule,
dans lequel, parmi les paramètres de véhicule, au moins l'empattement, l'écartement de voie, le poids, la charge sur roue, la cambrure et/ou la dérive des roues de véhicule sont évalués.
